# EUROPEAN PATENT APPLICATION

(11) **EP 2 618 471 A2**
(43) Date of publication of application: **24.07.2013**
(21) Application number: 13151621.3
(22) Date of filing: 17.01.2013
(51) Int. Cl.: H02M 7/02

(54) **Variable voltage reference in power rectification**

(30) Priority: 17.01.2012 US 201213352061
(71) Applicant: Hamilton Sundstrand Corporation, Windsor Locks, CT 06096-1010 (US)
(72) Inventor: Wlaznik, Nicholas, Rockford, IL 61109 (US); Mayer, Timothy Michael, Belvidere, IL 61008 (US)
(74) Representative: Tomlinson, Kerry John

(57) **Abstract**

A power rectification system (100,200) includes power electronics (103) configured to rectify an alternating current (AC) waveform to produce a direct current (DC) output voltage, a control circuit (102) configured to control the power electronics based upon an error value, and a voltage reference control portion (101,201) configured to provide the error value based upon a variable voltage reference and the DC output voltage. The variable voltage reference varies between the DC output voltage (V_{DC}) and a fixed voltage reference (V_{REF}).

## Description

### BACKGROUND OF THE INVENTION

Generally, the present invention relates to power rectification, and more particularly, exemplary embodiments of the present invention relate to voltage references used in power rectification systems.

Conventionally, a feedback control system for power rectification considers an output voltage of a rectifier for control of the rectifier. The output voltage may be a DC voltage produced as an output of the rectifier. For control, the DC voltage is compared to a fixed reference value to generate an error value. This error value is considered when directing the rectifier to rectify an AC waveform to produce the DC voltage. It follows then, that if a conventional power rectification system is at rest, the error value when starting the system from rest will be very large as the DC output voltage is very low or close to zero. Thus, the feedback control system, when considering this large error value, will draw a proportionally large amount of current as compared to steady-state operation of the power rectification system.

### BRIEF DESCRIPTION OF THE INVENTION

According to an exemplary embodiment of the present invention, a power rectification system includes power electronics configured to rectify an alternating current (AC) waveform to produce a direct current (DC) output voltage, a control circuit configured to control the power electronics based upon an error value, and a voltage reference control portion configured to provide the error value based upon a variable voltage reference and the DC output voltage. According to this exemplary embodiment, the variable voltage reference varies between the DC output voltage and a fixed voltage reference.

Viewed from another aspect, the invention provides a method of power rectification, comprising: initiating a power rectification system; rectifying an alternating current (AC) waveform to produce a direct current (DC) output voltage based upon an error value; determining if the power rectification system is unstable in response to the initiating and the rectifying; upon determining that the power rectification system is unstable, selectively varying a variable voltage reference between at least two values to reduce the error value and stabilize the power rectification system.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 shows a power rectification system with a variable voltage reference, according to an exemplary embodiment of the present invention;

FIG. 2 shows a more detailed example of the power rectification system of FIG. 1, according to an exemplary embodiment of the present invention; and

FIG. 3 is a flowchart of a method of power rectification, according to an exemplary embodiment of the present invention.

### DETAILED DESCRIPTION OF THE INVENTION

According to exemplary embodiments of the present invention, a control scheme for a power rectification system is provided which significantly reduces current draw when initiating a power rectification system. The technical effects and benefits of exemplary embodiments of the present invention include a reduced risk of failure due to overcurrent conditions and reduced strain on electronic power components during system initiation.

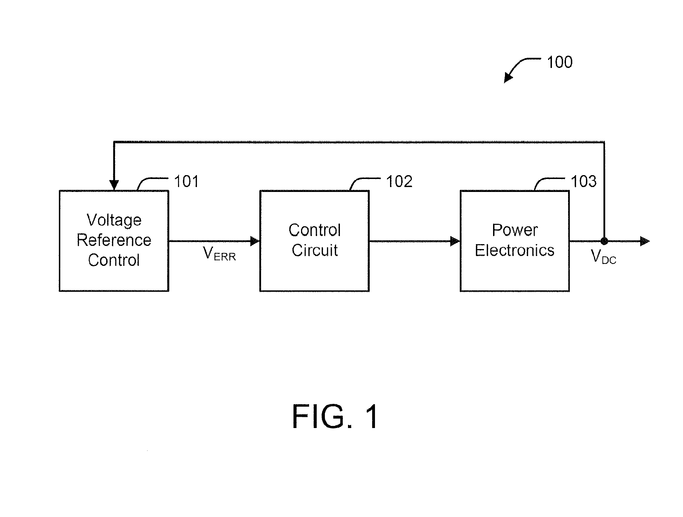

Turning to FIG. 1, a power rectification system 100 is illustrated. The system 100 includes voltage reference control portion 101, control circuit 102 in operative communication with the voltage reference control portion 101, and power rectification electronics 103 in communication with the control circuit 102. Further, the voltage reference control portion 101 samples an output voltage V_{DC} of the power electronics 103 for feedback control.

According to exemplary embodiments of the present invention, the voltage reference control portion 101 includes a plurality of electronic control components which determine an appropriate voltage error value V_{ERR} to provide control circuit 102. The control circuit 102, upon receipt of the error value V_{ERR}, directs the power electronics 103 to rectify an AC waveform to produce the output voltage V_{DC} based on the error value V_{ERR}. Thus, if an error is large, the control circuit 102 directs the power electronics 103 to compensate accordingly to ensure a stable output voltage. Therefore, if the system 100 is being initiated, and only a stable, fixed reference voltage is considered when calculating V_{ERR}, a proportionally large amount of current may be drawn. However, according to exemplary embodiments of the present invention, the voltage reference control portion 101 is configured to produce an error value of V_{ERR} dependent upon an operating state of the system 100. For example, if the system 100 is being initiated, the voltage reference control portion 101 may, instead of using a fixed reference value, use a variable reference value to calculate V_{ERR}. Thereafter, upon stabilization of the system 100, the voltage reference control portion 101 may use a different reference value to maintain steady state operation of the system 100.

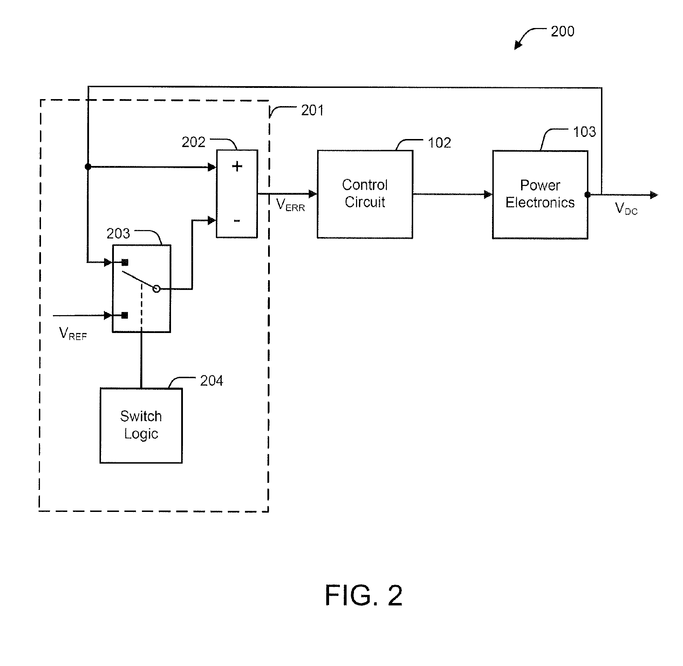

For example, a detailed example of one exemplary embodiment of voltage reference control portion 101 is provided in FIG. 2. As illustrated, the voltage reference control portion 201 is one example of a control portion equivalent to voltage reference control portion 101. The voltage reference control portion 201 is configured to provide the error voltage V_{ERR} to control circuit 102, which subsequently directs power electronics 103 to rectify an AC waveform into the output voltage V_{DC}. According to this exemplary embodiment, the voltage reference control portion 201 may include an error determination portion 202 configured to determine the error voltage based upon two separate values, for example, through a simple difference operation where a first value is subtracted from a second value to determine V_{ERR}.

As shown, the first value may be the output voltage V_{DC}. However, the second value may be a variable voltage reference provided by a dynamic switch 203. The dynamic switch 203 may be any suitable switch, including a transistor, electromechanical switch, micro-electromechanical system (MEMS) switch, or any other suitable switch able to selectively output one of at least two inputs. Thus, the switch 203 may be considered a variable voltage reference selection portion selecting the variable voltage reference as one of the at least two inputs. The at least two inputs, according to one exemplary embodiment, include the output voltage V_{DC} and a fixed voltage reference value V_{REF}. The inputs are switched through control signals applied from switch logic 204, which selectively applies one of the at least two inputs to the error determination portion 202.

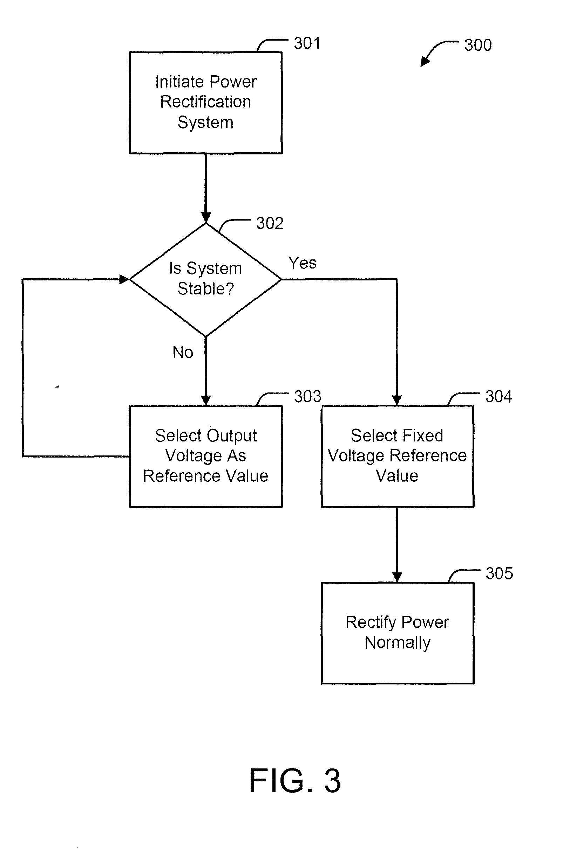

Therefore, as both the actual output voltage and a fixed reference voltage may be selectively applied to the error determination portion, the calculated error value may be reduced during system initiation thereby reducing initial current draw. For example, during system initiation, the actual output voltage may be compared against itself at portion 202, thereby providing a relatively low error value very close to, or at, zero. Subsequently, after an appropriate initiation period has lapsed, the fixed reference value V_{REF} may be compared to the output voltage V_{DC} at portion 202 by selectively switching portion 203 to determine an actual error. However, as an appropriate startup period has already lapsed, the increase in current draw may be negligible as compared to conventional systems. The methodology described above is more clearly illustrated in FIG. 3, which may be performed by control circuitry integrated within the switch logic portion 204 or the voltage reference control portion 101.

As shown, a method of power rectification 300 includes initiating a power rectification system (e.g., 100 or 200) at block 301. Initiation may include powering on appropriate circuitry such that voltage reference control portion 101, 201, control circuit 102, and power electronics 103 are operational. Thereafter or at substantially the same time, a state of the system is considered to determine if the system is stable at block 302. For example, immediately after system initiation at block 301, the system may be relatively unstable. Therefore, the output voltage V_{DC} may be selectively applied to an error determination portion 202 through switch 203 to reduce the error value at block 303. The reduced error value may therefore reduce current draw during this initial phase. Subsequently, after an appropriate amount of time has lapsed, or after a predetermined voltage is detected at the output of the system, a fixed voltage reference value may be selectively applied to an error determination portion 202 through switch 203 to change the error value at block 304. Thereafter, power may be rectified normally at block 305, for example, as if in steady state using an appropriate error value determined by the fixed reference voltage.

As described above, power rectification systems according to exemplary embodiments reduce current draw during system initiation while also allowing for stable steady-state operation through the application of a variable voltage reference. According to at least one exemplary embodiment, the variable voltage reference is a selectively switched value which includes at least two voltage values, the output voltage and a fixed reference voltage. During system initiation, the output voltage is selected which reduces a voltage error to near zero. After an appropriate amount of time has lapsed, the fixed reference value is selected.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A power rectification system (100,200), comprising:
power electronics (103) configured to rectify an alternating current (AC) waveform to produce a direct current (DC) output voltage;
a control circuit (102) configured to control the power electronics based upon an error value; and
a voltage reference control portion (101,201) configured to provide the error value based upon comparison of a variable voltage reference and the DC output voltage, wherein the variable voltage reference varies between the DC output voltage (V_{DC}) and a fixed voltage reference (V_{REF}).

2. The system of claim 1, wherein the voltage reference control portion (201) comprises:
an error determination portion (202) configured to determine the error value based upon the variable voltage reference and the DC output voltage (V_{DC}).

3. The system of claim 2, wherein the error determination portion (202) is configured to determine the difference between the variable voltage reference and the DC output voltage (V_{DC}).

4. The system of claim 2 or 3, wherein the voltage reference control portion (201) further comprises:
a variable voltage reference selection portion (203) configured to selectively apply one of the DC output voltage and the fixed reference voltage as the variable voltage reference.

5. The system of claim 4, wherein the variable voltage reference selection portion (203) is a dynamic switch.

6. The system of claim 5, wherein the dynamic switch is one of an electromechanical switch, a transistor, and a micro-electromechanical system (MEMS) switch.

7. The system of claim 5 or 6, wherein the voltage reference control portion further comprises:
a dynamic switch control portion (204) configured to direct the dynamic switch to selectively apply one of the at least two values as the variable voltage reference.

8. The system of claim 7, wherein the dynamic switch control portion (204) includes control circuitry configured to perform a method of power rectification, the method comprising:
determining if the power rectification system is unstable;
upon determining that the power rectification system is unstable, selectively switching the variable voltage reference to reduce the error value.

9. The system of any of claims 1 to 6, wherein the voltage reference control portion (201) includes control circuitry configured to perform a method of power rectification, the method comprising:
determining if the power rectification system is unstable;
upon determining that the power rectification system is unstable, selectively varying the variable voltage reference to reduce the error value.

10. A method of power rectification, comprising:
initiating (301) a power rectification system;
rectifying an alternating current (AC) waveform to produce a direct current (DC) output voltage based upon an error value;
determining (302) if the power rectification system is unstable in response to the initiating and the rectifying;
upon determining that the power rectification system is unstable, selectively varying a variable voltage reference between at least two values (303) to reduce the error value and stabilize the power rectification system.

11. The method of claim 10, further comprising:
upon determining (302) that the power rectification system is stable, selectively varying the variable voltage reference to a fixed voltage reference value (304) to produce a true error value.
